# DEMANDE DE BREVET EUROPEEN

(11) **EP 0 543 723 A1**
(43) Date de publication de la demande: **26.05.1993**
(21) Numéro de dépôt: 92403097.6
(22) Date de dépôt: 18.11.1992
(51) Int. Cl.: F16B 13/12, F16B 13/06

(54) **Douille tubulaire de cheville à noyau d'expansion**

(30) Priorité: 22.11.1991 FR 9114376
(71) Demandeur: SOCIETE DE PROSPECTION ET D'INVENTIONS TECHNIQUES SPIT, F-26501 Bourg-Les-Valence Cédex (FR)
(72) Inventeur: Vernet, Franck, F-26300 Bourg de Peage (FR)
(74) Mandataire: Bloch, Gérard

(57) **Abrégé**

La douille est pour matériau support. Elle comporte une collerette (3) d'appui sur le support (41) et des pattes d'ancrage (5,6) expansibles sous l'action d'un noyau d'expansion (21) taraudé, intérieur, entre les pattes (5,6). Le noyau est agencé pour être éloigné de la collerette sous l'action d'un élément d'expansion indirecte et assurer au moins l'expansion d'une zone intermédiaire de la douille dans un matériau plein. Il peut être rapproché de la collerette (3) sous l'action d'une vis d'expansion (44) immobilisée en translation, assurer l'expansion progressive de la douille dans un matériau creux et bloquer la douille (1) contre la face interne (46) du support (41).

## Description

La présente invention concerne une douille tubulaire de cheville pour matériau support, à collerette d'appui sur la face externe du support et à pattes d'ancrage expansibles, de part et d'autre d'un plan axial, sous l'action d'un élément d'expansion.

Des douilles de cheville de ce type sont très répandues. Une fente diamétrale, depuis l'extrémité opposée à la collerette, ménage les deux pattes expansibles sur une grande partie de la longueur ; un alésage de réception d'une vis ou d'un clou d'expansion, percé depuis l'extrémité à collerette, débouche entre les pattes. Après traversée de cet alésage, la vis, ou le clou, de diamètre plus grand que la largeur de la fente, écarte les deux pattes. L'alésage peut être prolongé dans la partie crurale de la douille, avec un rétrécissement de diamètre vers les extrémités libres des pattes.

Une douille du type défini ci-dessus convient parfaitement à un matériau plein. Il peut ne pas en être de même en cas de matériau creux, à paroi externe, telle une brique. Dans ce cas, le risque est en effet grand que les pattes ne s'écartent l'une de l'autre que dans le vide ménagé au-delà de la paroi externe et donc que l'ancrage de la douille soit impossible.

L'invention de la présente demande vise à perfectionner la douille de l'art antérieur pour éliminer ce risque.

A cet effet, l'invention concerne une douille du type défini ci-dessus, caractérisée par le fait qu'elle comporte au moins un noyau d'expansion taraudé, intérieur, entre les pattes, agencé pour être éloigné de la collerette, vers l'avant, sous l'action d'un élément d'expansion indirecte et assurer au moins l'expansion d'une zone intermédiaire de la douille dans un matériau plein ou pour être rapproché de la collerette, vers l'arrière, sous l'action d'une vis d'expansion immobilisée en translation, assurer l'expansion progressive de la douille dans un matériau creux à paroi externe, jusqu'en limite d'une zone arrière de longueur sensiblement inférieure à l'épaisseur de la paroi externe et bloquer la douille contre la face interne de la paroi externe.

On remarquera que FR-A 2 228 169 enseigne une douille de cheville qui présente quelques similitudes avec celle de l'invention, avec notamment un noyau d'expansion. Toutefois, elle ne peut être utilisée que dans un matériau plein ; on peut également rapprocher le noyau de l'ouverture du trou d'ancrage, vers l'arrière, par vissage d'une vis mais avec pour effet, non pas d'assurer une expansion mais, au contraire, d'en annuler une.

Avantageusement, le noyau d'expansion est solidaire de façon détachable de la douille.

Avantageusement encore, le noyau est agencé pour être traversé par un élément d'expansion directe d'une zone avant de la douille.

De préférence, le noyau d'expansion est un coin double à rampes d'expansion inclinées en sens inverses sur ledit plan axial.

La douille peut comporter une pluralité de noyaux d'expansion.

L'invention sera mieux comprise à l'aide de la description suivante de plusieurs formes de réalisation de la douille de l'invention, en référence au dessin annexé, sur lequel
- la figure 1 représente une vue en perspective d'une première forme de réalisation de la douille de l'invention ;
- la figure 2 représente une vue en coupe axiale de la douille de la figure 1 selon un premier plan de symétrie à travers la fente d'expansion ;
- la figure 3 représente une vue en coupe axiale de la douille de la figure 1 selon un second plan de symétrie perpendiculaire au premier ;
- la figure 4 représente une vue en perspective de la demi-douille de la figure 1, avec le noyau d'expansion, en entier, d'un premier type ;
- la figure 5 illustre la pose de la douille de la figure 1 dans un matériau plein ;
- la figure 6 illustre la pose de la douille de la figure 1 dans une brique creuse ;
- la figure 7 représente une vue latérale d'une deuxième forme de réalisation de la douille de l'invention, du type de celle des figures 1 à 6 mais à noyaux d'expansion multiples et
- la figure 8 représente une vue en perspective d'une demi-douille d'une troisième forme de réalisation, avec un noyau d'expansion d'un second type.

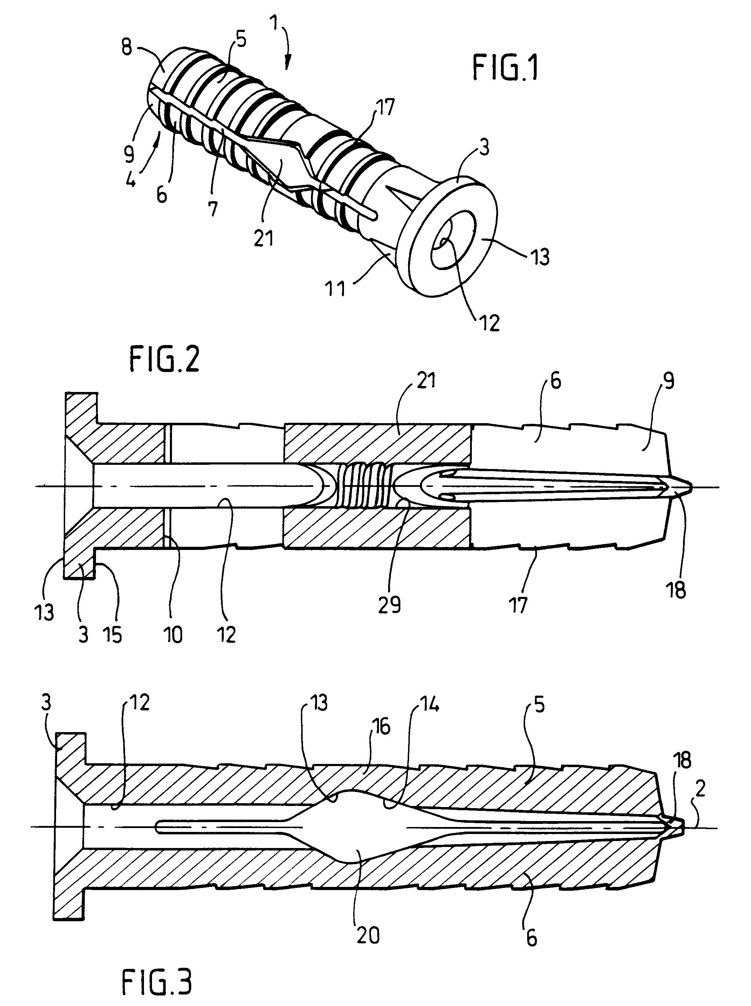

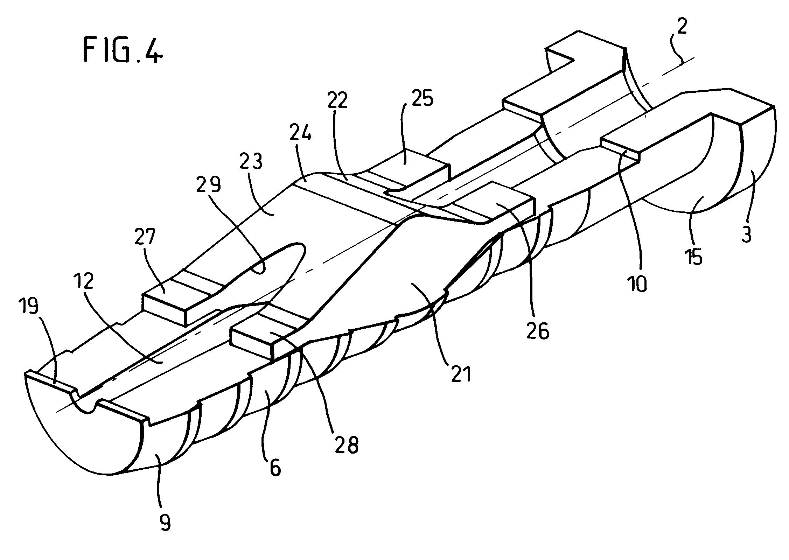

La douille 1 des figures 1 à 6 est tubulaire, d'axe 2, elle comporte une collerette d'appui 3, à une extrémité, et une portion crurale 4 à deux pattes 5, 6 espacées l'une de l'autre par une fente axiale et diamétrale 7 s'étendant sur une grande partie de la longueur de la douille depuis les extrémités libres 8, 9 des pattes 5, 6 jusqu'à un épaulement transversal 10, proche de la collerette 3. Des nervures axiales anti-rotation 11 s'étendent à l'extérieur de la paroi de la douille, depuis la collerette 3. Un alésage axial 12 s'étend d'une extrémité à l'autre de la douille. Tronconique, à travers la collerette 3, depuis son bord externe 13 jusque dans le plan de sa surface d'appui 15, puis cylindrique jusqu'à sensiblement mi-longueur de la douille, l'alésage 12 a un diamètre qui se rétrécit au-delà progressivement jusqu'aux extrémités libres 8, 9 des pattes 5, 6. Dans la zone médiane de la douille, la paroi de la douille présente une double échancrure 20 symétrique par rapport au plan axial de la fente 7, chaque patte présentant deux rampes, ou surfaces de came, intérieures 13, 14 inclinées en sens inverses sur ce plan axial, depuis une zone 16 d'épaisseur de paroi amincie, vers ce plan axial. Des nervures circulaires transversales 17 sont formées à l'extérieur de la paroi des pattes 5, 6 pour améliorer la tenue de la douille dans le matériau support de réception. En référence aux figures 2 à 4, les pattes 5, 6 sont à l'origine réunies par une petite liaison 18 et maintenues l'une contre l'autre par deux petits rebords transversaux d'extrémité 19.

La douille comporte un noyau d'expansion intérieur 21 entre les deux pattes 5, 6, dans la zone de la double échancrure 20 et qui épouse les surfaces de came intérieures 13, 14 des pattes de la douille. Il s'agit d'un coin double à deux plans de symétrie, le premier, qui est le plan axial de la fente 7, et le second, qui est le plan axial perpendiculaire au premier. Ainsi, le noyau possède, de chaque côté du premier plan de symétrie, deux rampes 22, 23 inclinées en sens inverses sur ce premier plan, depuis une zone médiane de renflement 24 vers ce premier plan de symétrie et formant la portion d'expansion du noyau. Quatre jambes 25-28 prolongent cette portion d'expansion, pour s'étendre au-delà de la zone de la double échancrure 20 de la douille et s'appuyer contre les portions de bord planes de la fente 7, l'épaisseur de ces jambes d'appui étant égale à la largeur de la fente. Dans le premier plan de symétrie, le plan axial de la fente 7, de la figure 2, le noyau 21 a grossièrement la forme d'un H. Un alésage axial taraudé 29, sensiblement de même section que l'alésage 12, traverse le noyau 21.

Les pattes de la douille peuvent être expansées par un élément d'expansion - un clou ou une vis - directement ou indirectement par l'intermédiaire du noyau. Les pattes de la douille peuvent être expansées par frappe d'un clou, par vissage d'une vis ou par frappe et vissage d'une vis.

### Expansion par clou

Dans ce cas, l'expansion ne peut intervenir que par frappe et dans un sens, vers l'extrémité avant de la douille.

Le clou peut traverser le coin pour directement expanser la zone d'extrémité avant de la douille. Le clou peut pousser le noyau 21 vers la zone d'extrémité avant de la douille, pour expanser indirectement la zone intermédiaire de la douille, puis traverser le noyau pour expanser directement la zone d'extrémité avant de la douille. Le clou peut aussi seulement pousser le noyau 21 vers la zone d'extrémité avant de la douille pour limiter l'expansion indirecte de la douille à sa zone intermédiaire.

### Expansion par vis

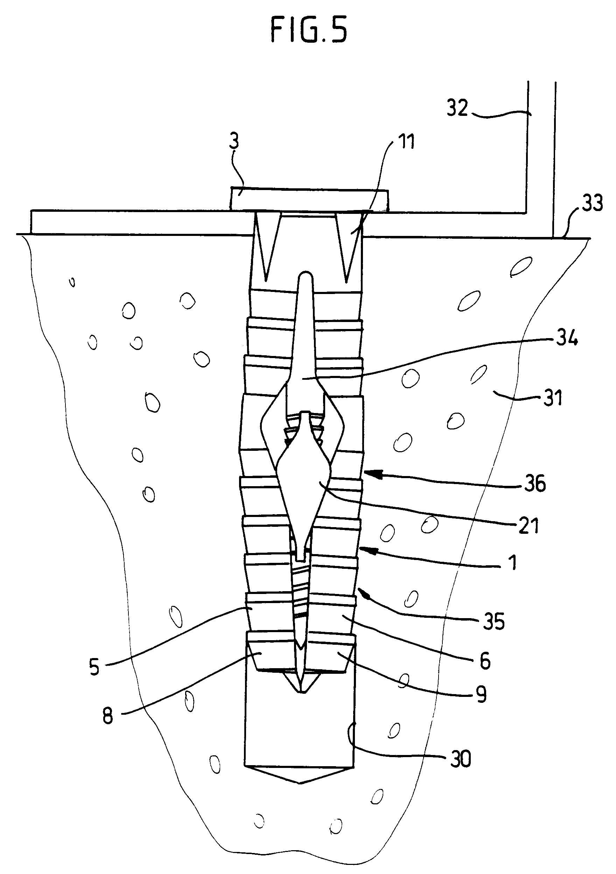

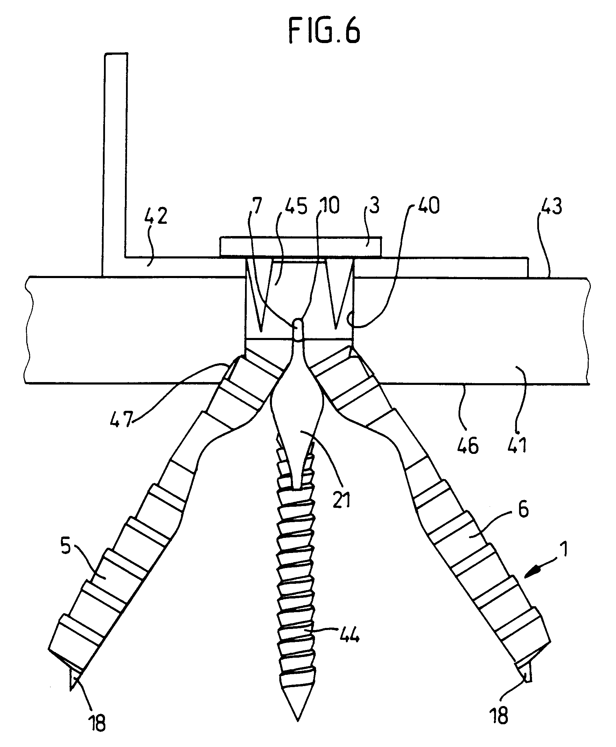

Elle peut être provoquée, dans un matériau plein, comme à l'aide d'un clou, par frappe et par vissage (figure 5). Elle peut être provoquée par vissage dans un matériau creux (figure 6).

En référence à la figure 5, on a préalablement foré un trou d'ancrage 30 dans un matériau support plein 31. Après avoir posé la pièce 32, en l'espèce une équerre, à fixer au support contre sa face externe 33, on introduit, à travers la pièce 32, la douille 1 dans le trou 30 jusqu'à ce que sa collerette 3 vienne en appui contre la pièce 32 et, indirectement, contre la face externe 33 du support 31. On introduit ensuite une vis de fixation 34 dans l'alésage axial de la douille ainsi que dans l'alésage axial du noyau 21 et on frappe sur la tête de la vis pour entraîner le noyau 21 et le repousser vers l'avant de la douille et expanser celle-ci dans une zone intermédiaire 36. On parfait l'expansion en continuant, par vissage et à travers le noyau 21, d'introduire la vis 34 dans l'alésage de la douille jusqu'à ce que la tête de vis vienne contre la portion tronconique de l'alésage de la douille et disparaisse dans sa collerette, pour expanser directement une zone 35 disposée en avant du noyau 21 et de la zone intermédiaire 36 et s'étendant sensiblement jusqu'aux extrémités libres 8, 9 des pattes 5, 6 de la douille.

En référence à la figure 6, on a préalablement percé un trou d'ancrage 40 ici dans la paroi externe 41 d'une brique. Après avoir posé la pièce 42, en l'espèce encore une équerre, à fixer à la brique contre la face externe 43 de sa paroi externe 41, on introduit, à travers la pièce 42, la douille 1 dans le trou 40 jusqu'à ce que sa collerette 3 vienne en appui contre la pièce 42. On introduit ensuite une vis 44 dans l'alésage axial de la douille 1 puis dans le noyau 21 dans lequel on la visse jusqu'à ce que sa tête vienne en butée contre la portion tronconique de l'alésage de la douille et disparaisse dans sa collerette 3. La vis 44 étant immobilisée en translation, on continue de la visser dans le noyau 21 pour rapprocher celui-ci de la collerette 3 et assurer l'expansion progressive de la douille par écartement progressif de ses pattes 5, 6 jusqu'en limite d'une zone arrière 45 de longueur légèrement inférieure à l'épaisseur de la paroi externe 41 et s'étendant axialement ici sensiblement de la collerette 3 à un plan transversal de la douille légèrement en avant de celui de l'épaulement 10 de la fente 7. Alors, la douille 1, par ses pattes 5, 6, est bloquée contre la face interne 46 de la paroi externe 41 ou plus exactement contre le bord interne 47, éclaté par le forage du trou 40.

Le noyau 21, sorti de moule solidaire des pattes 5, 6, en a été détaché, dans le cas du matériau plein de la figure 5, par la frappe de la vis et, dans le cas du matériau creux de la figure 6, par la traction exercée sur lui par le vissage de la vis immobilisée en translation. Naturellement, le noyau pourrait aussi n'être que glissé entre les pattes de la douille. Quant à la liaison 18, elle a été brisée, dans le cas du matériau creux de la figure 6, par l'écartement des pattes 5, 6 au début de leur expansion. Naturellement encore, l'alésage de la douille pourrait aussi ne s'étendre qu'à travers la zone arrière 45.

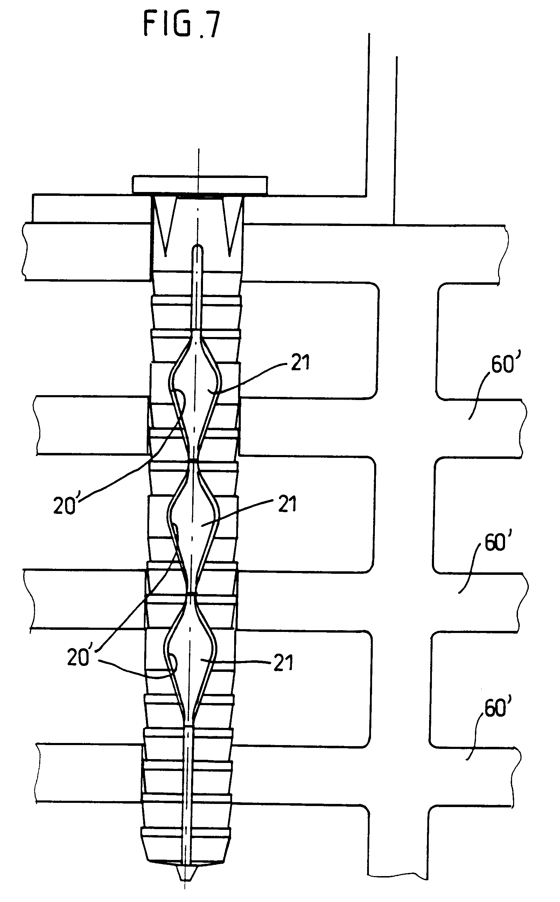

La forme de réalisation de la figure 7 de la douille de l'invention ne se distingue de celle des figures précédentes que par sa pluralité, ici trois, d'échancrures 20' et de noyaux d'expansion 21', afin de provoquer une expansion cylindrique.

Ces noyaux 21' peuvent être indépendants les uns des autres ou reliés entre eux par leurs jambes. Dans un matériau plein, la pose de la douille peut s'effectuer par frappe ou par vissage. Les noyaux peuvent être disposés, les uns par rapport aux autres, selon un pas qui peut être égal à celui des échancrures 20' ou différent.

Dans un matériau creux à cloisons internes multiples 60', comme représenté sur la figure 7, si les pas sont égaux, l'expansion intervient à l'arrière de chacune des cloisons. Si les pas sont différents, comme représenté sur la figure 7, l'expansion intervient à l'arrière d'au moins une des cloisons.

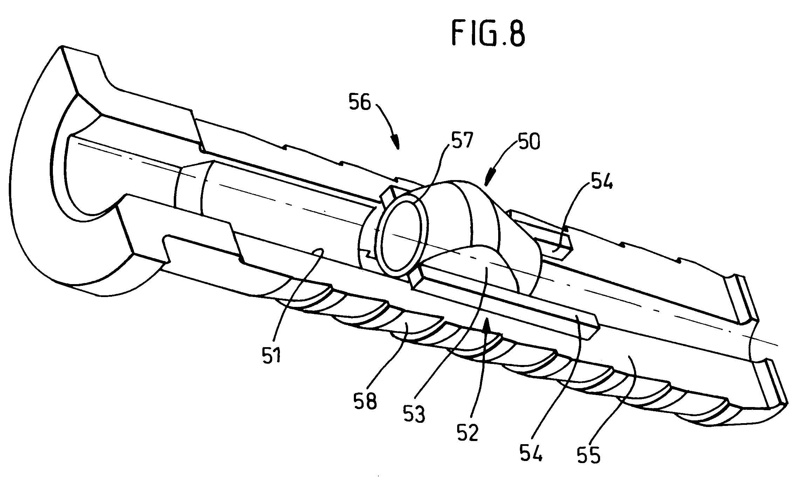

La forme de réalisation de la figure 8 se distingue des autres par le fait que le noyau d'expansion 50 est conformé pour être déplacé dans l'alésage axial 51 de la douille 56, lui servant de goulotte et de forme complémentaire dans la zone 52 de positionnement initial du noyau. Le noyau 51 possède ainsi deux flancs latéraux plans 53, le long de chacun desquels s'étend une jambe 54 en appui contre les bords plans associés 55 de la fente de la douille qui s'étendent sur toute la longueur des pattes 58. Le noyau 50 est aussi délimité transversalement par deux bords annulaires plans 57. Le fontionnement de la douille 56 reste identique à celui des formes de réalisation précédentes. Une douille de ce type et à noyaux multiples est également envisageable.

## Revendications

1. Douille tubulaire de cheville pour matériau support, à collerette (3) d'appui sur la face externe (33;43) du support (31;41) et à pattes d'ancrage expansibles (5,6), de part et d'autre d'un plan axial (7), sous l'action d'un élément d'expansion, caractérisée par le fait qu'elle comporte au moins un noyau d'expansion taraudé (21;50), intérieur, entre les pattes (5,6), agencé pour être éloigné de la collerette (3), vers l'avant, sous l'action d'un élément (34;44) d'expansion indirecte et assurer au moins l'expansion d'une zone intermédiaire (36) de la douille dans un matériau plein (31) ou pour être rapproché de la collerette (3), vers l'arrière, sous l'action d'une vis d'expansion (44) immobilisée en translation, assurer l'expansion progressive de la douille dans un matériau creux à paroi externe (41), jusqu'en limite d'une zone arrière (45) de longueur sensiblement inférieure à l'épaisseur de la paroi externe (41) et bloquer la douille (1) contre la face interne (46) de la paroi externe (41).

2. Douille selon la revendication 1, dans laquelle le noyau (21;50) est solidaire de façon détachable de la douille (1;56).

3. Douille selon l'une des revendications 1 et 2, dans laquelle le noyau (21;50) est agencé pour être traversé par un élément d'expansion directe d'une zone avant (35) de la douille.

4. Douille selon l'une des revendications 1 à 3, dans laquelle le noyau d'expansion est un coin double (21;50) à rampes d'expansion (22,23) inclinées en sens inverses sur ledit plan axial (7).

5. Douille selon la revendication 4, dans laquelle, dans une zone médiane, la paroi de la douille (1) présente une double échancrure (20) symétrique par rapport audit plan axial (7), avec, sur chaque patte d'ancrage, deux rampes (13,14) inclinées depuis une zone (16) d'épaisseur de paroi amincie.

6. Douille selon la revendication 5, dans laquelle le noyau d'expansion (21) est prolongé par des jambes (25-28) en appui contre des portions de bord planes d'une fente (7) ménageant les pattes (5,6) de la douille (1).

7. Douille selon la revendication 5, dans laquelle les pattes d'ancrage (58) sont ménagées par une fente dont les bords (55) sont plans sur toute la longueur et l'alésage (51) sert de goulotte au noyau d'expansion (50).

8. Douille selon la revendication 6, dans laquelle le noyau (50) possède deux flancs latéraux plans (53) le long de chacun desquels s'étend une jambe d'appui (54).

9. Douille selon l'une des revendications 1 à 8, dans laquelle il est prévu une pluralité de noyaux d'expansion (21').
